# EUROPEAN PATENT APPLICATION

(11) **EP 2 727 458 A1**
(43) Date of publication of application: **07.05.2014**
(21) Application number: 13005099.0
(22) Date of filing: 25.10.2013
(51) Int. Cl.: A01G 7/04

(54) **Illumination device**

(30) Priority: 01.11.2012 JP 2012242120
(71) Applicant: Sharp Kabushiki Kaisha, Osaka-shi, Osaka 545-8522 (JP)
(72) Inventor: Kubo, Tomoki, Osaka-shi Osaka 545-8522 (JP)
(74) Representative: Müller - Hoffmann & Partner

(57) **Abstract**

A plant cultivation system (10) includes: (i) a magenta LED (20a) including an LED element and a fluorescent substance which emits light upon irradiation of excitation light emitted from the LED element, the magenta LED emitting mixed-color light including far-red light having a wavelength of not less than 700 nm to not more than 800 nm; and (ii) a red light source emitting red light (20b).

## Description

### Technical Field

The present invention relates to an illumination device for cultivating a plant by use of artificial light.

### Background Art

There is an increasing need for a plant factory as a result of advancement in agricultural technologies. A plant factory is less affected by weather etc., and therefore makes it possible to achieve year-round planned plant production. Especially leaf vegetables such as lettuce require only a small amount of light for their cultivation, and are therefore increasingly cultivated in plant factories.

Artificial light currently used in plant factories is mainly light from a fluorescent tube which has advantages such as low cost and high performance. However, future improvement in performance and reduction in cost of a light-emitting diode (LED) is likely to bring an LED to mainstream artificial light for cultivation.

By the way, artificial light used for plant cultivation need not necessarily be monochromatic light, but can be a plurality of types of light having respective different wavelengths. An example of an invention utilizing such plurality of types of light having respective different wavelengths is disclosed in Patent Literature 1.

Specifically, Patent Literature 1 describes a crop growing system for continuously irradiating a crop with red light and far-red light during a period of time at about sunset. The crop growing system described in Patent Literature 1 includes a first light source for emitting red light, a second light source for emitting far-red light, a control section for controlling light-emitting operations of these light sources, and a time setting section for setting, in the control section, a period of time in which these light sources execute the light-emitting operations.

The crop growing system described in Patent Literature 1 grows a plant by utilizing red LEDs for emitting red monochromatic light and far-red LEDs for emitting far-red monochromatic light. Like this crop growing system, current researches concerning light quality of a monochromatic LED for use in plant factories widely deal with red light, far-red light, and blue light. It is becoming clear that especially use of red light having a peak wavelength in the vicinity of the wavelength of 660 nm and far-red light having a peak wavelength in the vicinity of the wavelength of 735 nm makes it possible to control blooming and to promote growth.

### Citation List

### Patent Literature 1

Japanese Patent Application Publication, Tokukai, No. 2012-70642 A (Publication Date: April 12, 2012)

### Summary of Invention

### Technical Problem

However, a far-red LED is far from practical use since its light intensity is often small. Accordingly, in a case where a red LED and a far-red LED are used for cultivation, a light intensity may be insufficient for some cultivated species. Further, a far-red LED is expensive since the number of manufacturers supplying a far-red LED is small. Moreover, increasing the number of far-red LEDs in order to achieve a desired amount of light would lead to a further increase in cost.

As described above, in a case where a red LED and a far-red LED are introduced into a plant factory, it is difficult to achieve a reduction in cost, and it is difficult to make a profit unless a market scale of a plant factory utilizing these LEDs is expanded.

Moreover, according to the above crop growing system, a spectrum in a red region of light with which a crop is irradiated is determined only by the red LEDs. This causes a problem that flexibility in controlling a spectrum in a red region is low.

The present invention was accomplished in view of the above problems, and an object of the present invention is to provide an illumination device which (i) makes it possible to easily achieve a desired light intensity of far-red light in plant cultivation utilizing illumination light including far-red light and (ii) allows for high flexibility in setting a spectrum of red light with which a plant is irradiated.

### Solution to Problem

In order to attain the above object, an illumination device according to one aspect of the present invention is an illumination device which emits illumination light for plant cultivation, the illumination device including: a main light source including a semiconductor light-emitting element and a fluorescent substance which emits light upon irradiation of excitation light emitted from the semiconductor light-emitting element, the main light source emitting mixed-color light including far-red light having a wavelength of not less than 700 nm to not more than 800 nm; and a red light source emitting red light having a wavelength of not less than 600 nm to not more than 700 nm.

### Advantageous Effects of Invention

According to one aspect of the present invention, the illumination device can irradiate a plant body with a practical amount of far-red light as an illumination device for plant cultivation and has an increased flexibility in designing a spectrum of red light included in illumination light.

### Brief Description of Drawings

Fig. 1 is a view schematically illustrating a configuration of a plant cultivation system of an embodiment of the present invention.
Fig. 2 is a view illustrating a light source unit which includes a combination of magenta LEDs and red LEDs and which is provided in an illumination device of the plant cultivation system.
Fig. 3 is a cross-sectional view illustrating a configuration of each of magenta LEDs.
   (a) of Fig. 4 is a view showing a spectrum of the magenta LEDs, (b) of Fig. 4 is a view showing a spectrum of the red LEDs, and (c) of Fig. 4 is a view showing a spectrum combining the spectrum of the magenta LEDs and the spectrum of the red LEDs.
Fig. 5 shows another embodiment of the present invention. (a) of Fig. 5 is a view showing a spectrum of the magenta LEDs, (b) of Fig. 5 is a view showing a spectrum of the red LEDs which has a peak wavelength different from that of the spectrum in a red region of the magenta LEDs, and (c) of Fig. 5 is a view showing a spectrum combining the spectrum of the magenta LEDs and the spectrum of the red LEDs which has a peak wavelength different from that of the spectrum in the red region of the magenta LEDs.
Fig. 6 shows still another embodiment of the present invention. (a) of Fig. 6 is a view illustrating a plant cultivation system which includes a curved light guide plate, and (b) of Fig. 6 is a view illustrating a plant cultivation system which includes a flat light guide plate.
Fig. 7 is a view illustrating an arrangement in which the diffusion plate is provided below the magenta LEDs and the red LEDs.
Fig. 8 is a view illustrating a configuration of a light source unit in the plant cultivation system which includes the light guide plate.
Fig. 9 is a view illustrating how the magenta LEDs and the red LEDs are disposed along edges of the light guide plate.

### Description of Embodiments

### [Embodiment 1]

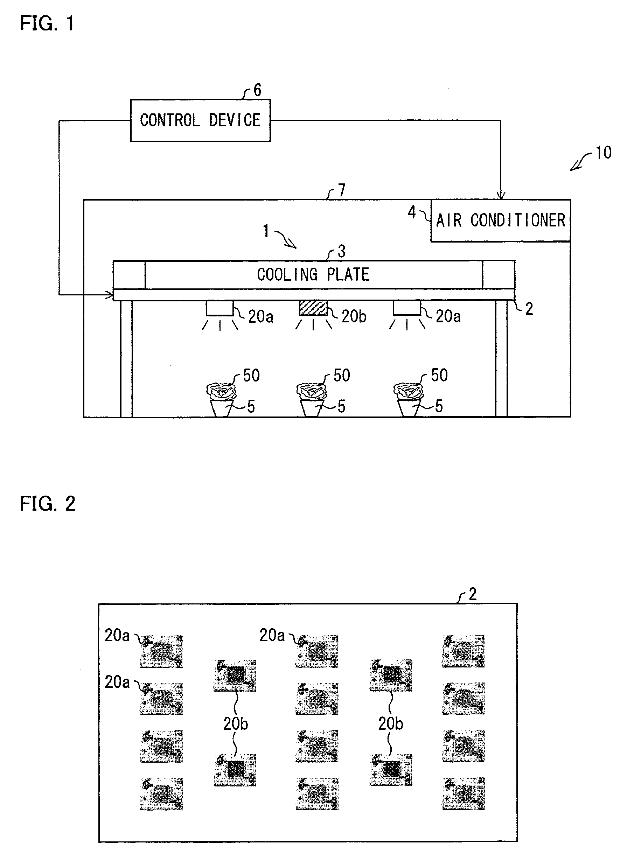

An embodiment of the present invention is described below with reference to Figs. 1 through 4. A plant cultivation system (illumination device) 10 of the present embodiment is, for example, a cultivation system (cultivation shelf for plant growth) used in a closed-type plant factory utilizing artificial light.

The plant cultivation system 10 is a system for cultivating a plant body 50 by irradiating the plant body 50 with magenta light (mixed light) emitted from magenta LEDs 20a and red light emitted from red LEDs (red light source) 20b. In the following description, mixture of magenta light emitted from the magenta LEDs 20a and red light emitted from the red LEDs 20b is referred to as illumination light.

The magenta light includes far-red light. Therefore, the plant body 50 can be irradiated with far-red light.

According to the plant cultivation system 10, a light intensity of emitted red light can be changed by adjusting electric power supplied to the red LEDs 20b. This allows the plant cultivation system 10 to freely adjust a ratio of red light and far-red light with which a plant is irradiated.

Note that the present invention relates to an illumination device and a cultivation system which are used in a cultivation facility in which a plant is cultivated by utilizing artificial light. The "cultivation utilizing artificial light" does not mean that solar light is not used at all, but means that at least part of light used for cultivation is artificial light. The present invention is applicable also to a case where a combination of solar light and artificial light is used for cultivation.

### (Configuration of Plant Cultivation System 10)

Fig. 1 is a view schematically illustrating a configuration of the plant cultivation system 10.

As illustrated in Fig. 1, the plant cultivation system 10 includes an illumination device 1, an air conditioner 4, a cultivation container 5, and a control device (control section) 6.

The illumination device 1 includes, as a light source for emitting light for cultivation of the plant body 50, a light source unit 2 which includes a substrate, the magenta LEDs 20a and the red LEDs 20b which are provided on the substrate. The light source unit 2 is provided above the cultivation container 5 and the plant body 50. Details of the light source unit 2 will be described later.

On the opposite side (upper side) of the light source unit 2, a cooling plate 3 is provided. The cooling plate 3 is a member for diffusing heat emitted by the magenta LEDs 20a and the red LEDs 20b. The cooling plate 3 is made of a material having high heat conductivity, such as a metal (e.g., iron, copper, aluminum). Note that the cooling plate 3 need not necessarily be provided if heat emitted by the magenta LEDs 20a and the red LEDs 20b can be released without any problem.

The air conditioner 4 is an air conditioner for adjusting temperature inside a cultivation room 7. The air conditioner 4 serves also as an air blower for circulating air inside the cultivation room 7.

The cultivation container 5 may be a planter in which culture soil or a solid medium for cultivation (e.g., rock wool, urethane, sponge) is put or may be a tank in which the plant body 50 is held and which is filled with a culture liquid for hydroponic culturing.

The control device 6 controls illuminance of the illumination device 1 and air-conditioning temperature and air volume of the air conditioner 4. Further, the control device 6 controls electric power supplied to the red LEDs 20b. Note that such an arrangement is also possible in which a control device for controlling the illumination device 1 is provided as a part of the illumination device 1 separately from a control device for controlling the air conditioner 4.

### (Configuration of Light Source Unit 2)

The following describes a configuration of the light source unit 2 with reference to Fig. 2. Fig. 2 is a view illustrating an example of a detailed configuration of the light source unit 2 shown in Fig. 1. As illustrated in Fig. 2, the light source unit 2 has, on the substrate thereof, a combination of a plurality of magenta LEDs (main light source) 20a and a plurality of red LEDs (red light source) 20b.

Specifically, in the example illustrated in Fig. 2, a plurality of columns of the magenta LEDs 20a and a plurality of columns of the red LEDs 20b are provided on the substrate of the light source unit 2 so that the column of the magenta LEDs 20a and the column of the red LEDs 20b are alternately provided. To be more specific, three columns of the magenta LEDs 20a are provided and two columns of the red LEDs 20b are provided. Each of the columns of the magenta LEDs 20a includes four magenta LEDs 20a. Meanwhile, each of the columns of the red LEDs 20b includes two red LEDs 20b. This means that the light source unit 2 illustrated in Fig. 2 has twelve magenta LEDs 20a and four red LEDs 20b.

Note that the way in which LEDs are disposed on the substrate of the light source unit 2 is not limited to the one illustrated in Fig. 2. For example, the light source unit 2 may be configured such that the magenta LEDs 20a and the red LEDs 20b form a checkered pattern, instead of providing columns of the magenta LEDs 20a and columns of the red LEDs 20b as illustrated in Fig. 2. Note, however, that in a case where the LEDs are disposed in an unbalanced way, a distribution of light quality of light with which the plant body 50 is irradiated is also unbalanced. It is therefore desirable that the magenta LEDs 20a and the red LEDs 20b be disposed as symmetrically as possible both in vertical and horizontal directions.

Note also that a ratio of the number of magenta LEDs 20a and the number of red LEDs 20b in the light source unit 2 is not limited to the one illustrated in Fig. 2. The ratio of the number of magenta LEDs 20a and the number of red LEDs 20b can be appropriately changed so that the plant body 50 is irradiated with red light and far-red light at a desired ratio.

Note, however, that it is desirable that the number of magenta LEDs 20a is larger than the number of red LEDs 20b since, in the plant cultivation system 10, the magenta LEDs 20a are used as a main light source for cultivation and the red LEDs 20b are used as supplemental light to the magenta LEDs 20a.

In Fig. 2, coin-type LEDs are illustrated as the magenta LEDs 20a and the red LEDs 20b. Note, however, that the magenta LEDs 20a and the red LEDs 20b may be surface-mounted type LEDs, bullet-shaped LEDs, or the like.

The red light source of the light source unit 2 is not limited to the red LEDs 20b. For example, the light source unit 2 may include, as the red light source, a fluorescent tube, a high-pressure sodium lamp, a xenon lamp, an EL (ElectroLuminescence) element, or the like.

### (Configuration of Magenta LED 20a)

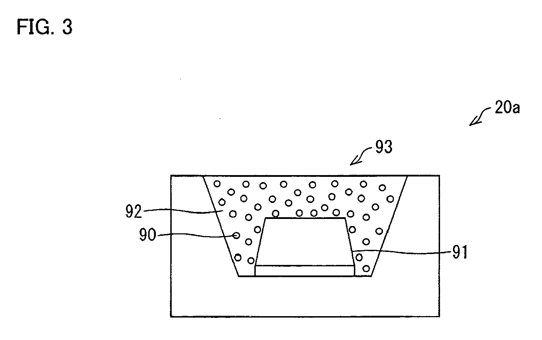

The following describes a configuration of each of the magenta LEDs 20a with reference to Fig. 3. Fig. 3 is a cross-sectional view illustrating a detailed configuration of each of the magenta LEDs 20a illustrated in Fig. 2.

As illustrated in Fig. 3, the magenta LED 20a includes an LED element (semiconductor light-emitting element, LED chip) 91. Around the LED element 91, fluorescent particles (fluorescent substances) 90 are scattered. The LED element 91 and the fluorescent particles 90 are sealed by a sealing material 92. For convenience of description, the LED element 91, the fluorescent particles 90, and the sealing material 92 are regarded as a single member and collectively referred to as a light-emitting section 93.

The LED element 91 emits, for example, blue light (wavelength of not less than 400 nm to not more than 500 nm) as excitation light.

Excited by the blue light, the fluorescent particles 90 emit fluorescence having a peak at a red light wavelength. As the fluorescent particles 90, red fluorescent substances having a CaAlSiN₃:Eu component, red fluorescent substances having a (Sr,Ca)AlSiN₃:Eu component, or the like can be used for example. The red fluorescent substances having a CaAlSiN₃:Eu component emit light having a light-emission peak in a wavelength range from not less than 650 nm to not more than 660 nm. The red fluorescent substances having a (Sr,Ca)AlSiN₃:Eu component emit light having a light-emission peak in a wavelength range from not less than 620 nm to not more than 630 nm.

The fluorescent particles 90 emit fluorescence by being irradiated with the excitation light emitted by the LED element 91. The excitation light and the fluorescence are emitted from the light-emitting section 93. Accordingly, the magenta LED 20a emits magenta light which is mixed light of blue light, red light, and far-red light. It is preferable that a ratio of photosynthetic photon flux of blue light having a wavelength of not less than 400 nm to not more than 500 nm and photosynthetic photon flux of red light having a wavelength of not less than 600 nm to not more than 700 nm in the magenta light be 1:0.5 to 1:10.

As described above, the magenta LED 20a is a complex LED including the LED element 91 for emitting blue light and the fluorescent particles 90 for emitting fluorescence upon irradiation of the blue light emitted from the LED element 91. The LED element 91 which emits blue light is capable of emitting light of a higher intensity than an LED element which emits far-red light as monochromatic light.

Accordingly, the magenta LED 20a is capable of emitting far-red light of a higher intensity than an LED element which emits far-red light as monochromatic light. It is therefore possible to irradiate the plant body 50 with far-red light having a practical light intensity for plant cultivation.

Further, the magenta LED 20a is an inexpensive and efficient illumination device which can emit light of three wavelengths, i.e., red light, blue light, and far-red light by itself.

### (Spectrum Property of Magenta LED 20a)

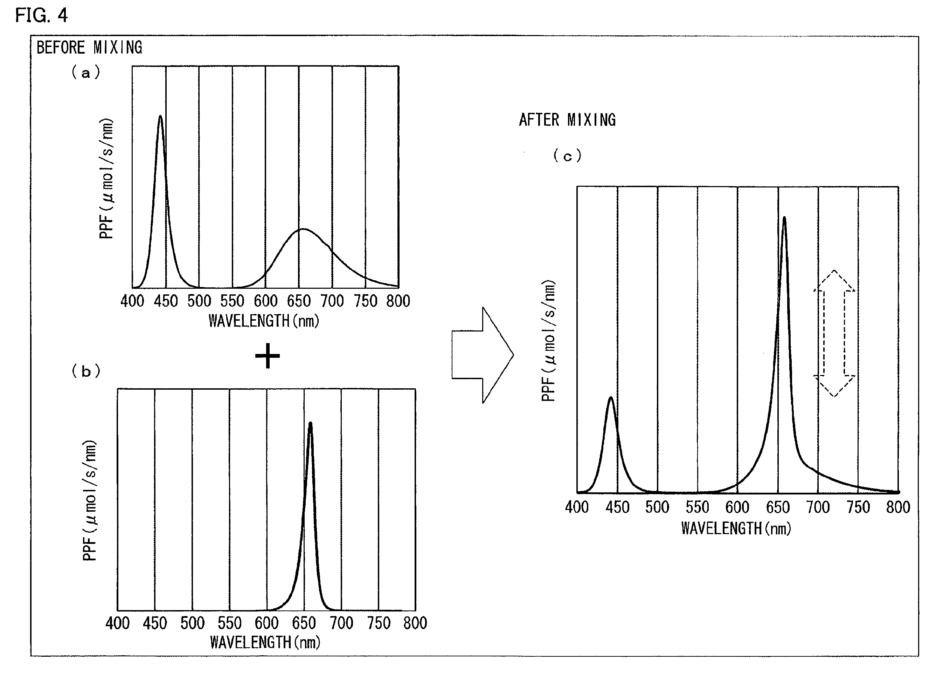

The following describes a spectrum property of the magenta LED 20a with reference to (a) of Fig. 4. (a) of Fig. 4 is a graph showing a spectrum of light emitted by the magenta LED 20a. In (a) of Fig. 4, the horizontal axis represents a wavelength and the vertical axis represents a photosynthetic photon flux density (PPF).

As shown in (a) of Fig. 4, the magenta LED 20a is a light source which emits a plurality of types of light having respective different peak wavelengths. Specifically, the magenta LED 20a emits red light having a wavelength of not less than 600 nm to not more than 700 nm, blue light having a wavelength of not less than 400 nm to not more than 500 nm, and far-red light having a wavelength of not less than 700 nm to not more than 800 nm. In the present embodiment, a peak wavelength in a red region of the magenta LED 20a is 660 nm. A ratio in light amount among red light, blue light, and far-red light which are emitted from the magenta LED 20a is, for example, 1:1:0.27. Note that a wavelength region of far-red light of the magenta LED 20a may have a peak at any wavelength or may have no particular peak.

As shown in (a) of Fig. 4, red light emitted by the magenta LED 20a has a wide wavelength region which covers even a wavelength region of far-red light (not less than 700 nm) as a foot of the spectrum of the red region. This is different from the red LED 20b which emits normal red light only.

### (Spectrum Property of Red LED 20b)

The following describes a spectrum property of the red LED 20b with reference to (b) of Fig. 4. (b) of Fig. 4 is a graph showing a spectrum of light emitted by the red LED 20b. In (b) of Fig. 4, the horizontal axis represents a wavelength and the vertical axis represents PPF. As shown in (b) of Fig. 4, the red LED 20b emits red monochromatic light having a peak at a wavelength in a range from 600 nm to 700 nm. In the present embodiment, a peak wavelength of the red LED 20b is 660 nm.

As described above, according to the present embodiment, both of the peak wavelength in the red region of the magenta LED 20a and the peak wavelength of the red LED 20b are the same value, i.e., 660 nm. Although it is desirable that these two peak wavelengths be the same value as described above, these two peak wavelengths may be different from each other provided that the difference is within approximately ±10 nm.

### (Control of Ratio of Red Light and Far-Red Light)

As described above, the light source unit 2 includes, as light sources, the magenta LEDs 20a and the red LEDs 20b which are provided on the substrate. Accordingly, the plant body 50 is irradiated with mixture of light emitted by the magenta LEDs 20a and light emitted by the red LEDs 20b.

As described above, the control device 6 is configured to adjust electric power supplied to the red LEDs 20b. The magenta LEDs 20a and the red LEDs 20b are driven separately. The control device 6 adjusts electric power supplied to the red LEDs 20b so as to regulate light intensity of the red LEDs 20b, while supplying constant electric power to the magenta LEDs 20a. This arrangement makes it possible to regulate a ratio (hereinafter referred to as R/FR) in light amount between red light and far-red light which are included in the illumination light.

Note that such an arrangement is also possible in which the control device 6 adjusts electric power supplied to the magenta LEDs 20a so as to regulate R/FR, while supplying constant electric power to the red LEDs 20b. Alternatively, such an arrangement is also possible in which the control device 6 adjusts both of electric power supplied to the red LEDs 20b and electric power supplied to the magenta LEDs 20a so as to regulate R/FR.

Note, however, that in a case where the control device 6 changes electric power supplied to the magenta LEDs 20a which emits, as mixed light, red light and far-red light, both of a wavelength region of the red light and a wavelength region of the far-red light are changed. This makes it difficult to properly regulate R/FR. It is therefore desirable that the control device 6 adjust electric power supplied to the red LEDs 20b so as to regulate R/FR, while supplying constant electric power to the magenta LEDs 20a.

Note that R/FR may be regulated by adjusting a ratio of the number of magenta LEDs 20a and the number of red LEDs 20b in the light source unit 2. Alternatively, R/FR may be regulated with the use of a spectrum regulation sheet.

### (Spectrum of Mixed Light)

As described above, the illumination light with which the plant body 50 is irradiated is mixture of light emitted by the magenta LEDs 20a and light emitted by the red LEDs 20b.
(c) of Fig. 4 is a graph showing a spectrum of mixed light of light emitted by the magenta LEDs 20a shown in (a) of Fig. 4 and light emitted by the red LEDs 20b shown in (b) of Fig. 4.

The spectrum of the magenta LEDs 20a shown in (a) of Fig. 4 has a gentle slope in a red region. By mixing this spectrum with the spectrum of red monochromatic light of the red LEDs 20b shown in (b) of Fig. 4, it is possible to obtain a spectrum with a large peak at a wavelength 660 nm (see (c) of Fig. 4).

Therefore, in the present embodiment, the plant body 50 is irradiated with light having a large peak in a red region.

### (Overview of Cultivation Method)

The following overviews a plant cultivation method using the plant cultivation system 10 with reference to Fig. 1.

According to the plant cultivation method, in a cultivation room 7 which is a space for plant cultivation utilizing artificial light, the plant body 50 which has been fixedly planted is irradiated with red light, blue light, and far-red light which are emitted from the light source unit 2 as light having a wavelength range necessary for photosynthesis.

Specifically, the plant body 50 is irradiated with red light, blue light, and far-red light emitted from the magenta LEDs 20a and with red light emitted from the red LEDs 20b. That is, light with which the plant body 50 is irradiated is mixture of two types of light quality, i.e., light quality of the magenta LEDs 20a and light quality of the red LEDs 20b.

R/FR of the light with which the plant body 50 is irradiated is regulated by causing the control device 6 to adjust electric power supplied to the red LEDs 20b so as to change light intensity of red light emitted from the red LEDs 20b.

A day-and-night cycle is appropriately determined according to a kind of the plant body 50. For example, in a case where the plant body 50 is a short-day plant, the control device 6 controls the light source unit 2 to adjust light amounts of the magenta LEDs 20a and the red LEDs 20b so that a light environment for a short-day condition is achieved. The day-and-night cycle is, for example, 12 hours of light period and 12 hours of dark period, but is not limited to this.

In accordance with the day-and-night cycle, temperature inside the cultivation room 7 is also adjusted. This adjustment of the temperature is carried out by the air conditioner 4 under control of the control device 6. The temperature inside the cultivation room 7 is, for example, set to 25°C during the light period and set to 10°C during the dark period.

The other cultivation conditions (composition of the culture soil, fertilization condition, etc.) can be known ones.

### (Effects)

As described above, the plant cultivation system 10 includes, as a light source, the magenta LEDs 20a. Each of the magenta LEDs 20a is an inexpensive and efficient device which emits, as mixed-color light, red light, blue light, and far-red light. It therefore becomes easier to maintain light intensities of red light and far-red light (especially light intensity of far-red light) at a high level, as compared with a case where red LEDs for emitting red monochromatic light and far-red LEDs for emitting far-red monochromatic light are combined. Further, it is possible to achieve low-cost cultivation since each of the magenta LEDs 20a is a less expensive device than a far-red LED.

The light emitted from the magenta LEDs 20a includes far-red light. Accordingly, in a case where a plant is cultivated by using the magenta LEDs 20a only, a ratio of a light amount of far-red light to a light amount of red light becomes excessive depending on the species of the plant. This can lead to a problem of spindly growth.

Even if electric power supplied to the magenta LEDs 20a is changed, the whole spectrum goes up and down, and R/FR does not change largely. Accordingly, in a case where only the magenta LEDs 20a are used, it is difficult to regulate R/FR of light with which the plant body 50 is irradiated.

In view of this, according to the plant cultivation system 10, the red LEDs 20b are provided as a light source in addition to the magenta LEDs 20a. The control device 6 adjusts electric power supplied to the red LEDs 20b so as to change a light intensity of red light emitted from the red LEDs 20b.

According to the arrangement, it is possible to easily regulate R/FR of the illumination light and to change a shape of a peak of red light included in the spectrum of the illumination light. Optimum R/FR for cultivation is determined for some species of the plant body 50. In such a case, the plant body 50 can be irradiated with illumination light having optimum illumination light.

In order to adjust a red region, it is only necessary for the control device 6 to adjust electric power supplied to the red LEDs 20b. It is therefore possible to make the configuration of the control device 6 simpler than a case where the control device 6 controls both of the magenta LEDs 20a and the red LEDs 20b.

In particular, in the present embodiment, a peak wavelength (660 nm) of a red region of the magenta LEDs 20a is equal to a peak wavelength (660 nm) of the red LEDs 20b. Accordingly, a spectrum of mixed light of these two types of light has a large peak at the wavelength of 660 nm. In cultivation of a plant, light having a spectrum having such a large peak is likely to be more suitable than light having a spectrum with a gentle slope in a red region.

Note, however, that LEDs having respective different peak wavelengths may be used as light sources for cultivation. Embodiment 2 below deals with an example in which a peak wavelength of a red region of the magenta LEDs 20a is different from a peak wavelength of the red LEDs 20b.

### [Embodiment 2]

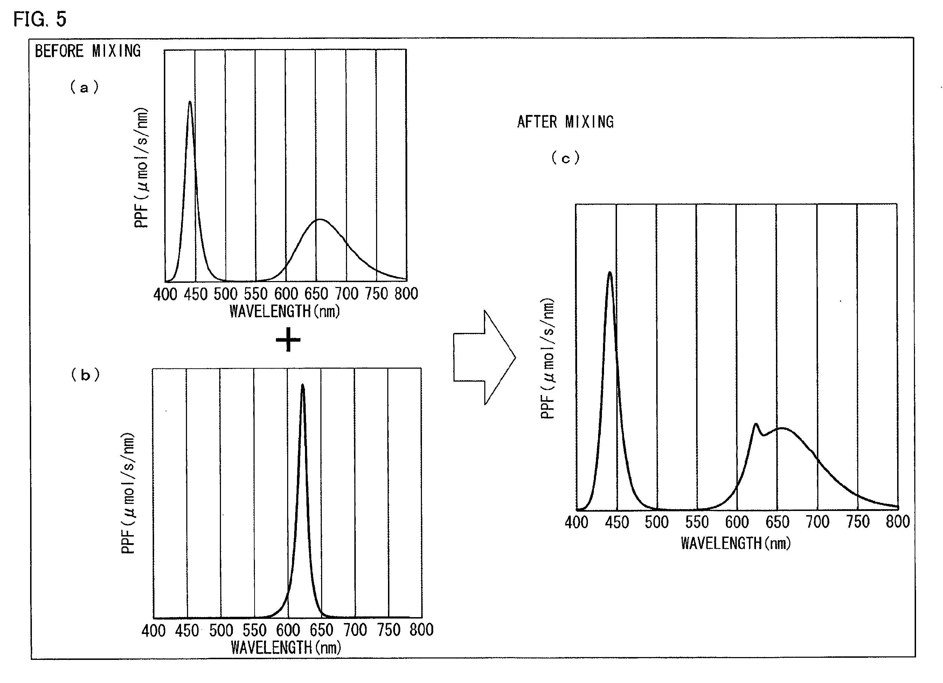

Another embodiment of the present invention is described below with reference to Fig. 5. Note that similar members to those of Embodiment 1 are given identical reference numerals, and are not explained repeatedly.

The present embodiment is different from Embodiment 1 in that a peak wavelength of red LEDs 20b is 620 nm. That is, a peak wavelength of red light included in magenta light emitted from magenta LEDs 20a is different from a peak wavelength of red light emitted from the red LEDs 20b. Note that a control device 6 adjusts electric power supplied to the red LEDs 20b so as to regulate R/FR of mixed light, as in Embodiment 1.
(a) of Fig. 5 is a graph showing a spectrum of magenta light emitted by the magenta LEDs 20a. The magenta LEDs 20a in the present embodiment are identical to those of Embodiment 1. A peak wavelength of red light included in magenta light emitted from the magenta LEDs 20a is 660 nm.

Meanwhile, (b) of Fig. 5 is a graph showing a spectrum of light emitted by the red LEDs 20b of the present embodiment. As shown in (b) of Fig. 5, in the present embodiment, a peak wavelength of the red LEDs 20b is 620 nm, which is different from the peak wavelength (660 nm) of the red LEDs 20b of Embodiment 1.
(c) of Fig. 5 is a graph showing a spectrum of mixed light of magenta light emitted by the magenta LEDs 20a shown in (a) of Fig. 5 and red light emitted by the red LEDs 20b shown in (b) of Fig. 5. As shown in (c) of Fig. 5, a spectrum of a red region of the mixed light has two peaks, i.e., a peak at 620 nm and a peak at 660 nm. A difference in peak wavelength between two types of red light included in the illumination light is within 10 nm in Embodiment 1, but the difference is 40 nm in the present embodiment.

By thus changing the peak wavelength of the red LEDs 20b to an appropriate one according to usage, it is possible to easily change a shape of a red region of the spectrum of the illumination light. For example, by changing a peak wavelength of the red LEDs 20b, it is possible to widen a wavelength region of emitted red light, change a shape of a peak, or form two peaks. Meanwhile, in a case where there provided no difference in peak wavelength between the two types of red light, a peak having a more peaked shape can be obtained as shown in (c) of Fig. 4 in Embodiment 1.

Further, since the control device 6 regulates a light intensity of the red LEDs 20b, it is possible to obtain light with a wider variety of spectrum shapes. For example, according to the spectrum of the mixed light shown in (c) of Fig. 5, there remains a peak derived from the peak wavelength of 660 nm which the magenta LEDs 20a originally have. By increasing the light intensity of the red LEDs 20b in this state, the mixed light can have a spectrum in which the spectrum of the red light emitted by the red LEDs 20b covers the peak of 660 nm of the magenta LEDs 20a. By thus regulating the light intensity of the red LEDs 20b according to species of a cultivated plant, usage, etc., it is possible to obtain a wide variety of spectrum shapes.

The above description has dealt with a case where the peak wavelength of the red region of the magenta LEDs 20a is 660 nm and the peak wavelength of the red LEDs 20b is 620 nm. Note, however, that the values of these peak wavelengths may be reversed. Specifically, such an arrangement is also possible in which the peak wavelength of the red region of the magenta LEDs 20a is 620 nm and the peak wavelength of the red LEDs 20b is 660 nm.

Note also that a combination of the peak wavelength of the magenta LEDs 20a and the peak wavelength of the red LEDs 20b is not limited to the combination of 660 nm and 620 nm, but can be a combination of different values.

The present invention is applicable not only to an LED direct type cultivation method as in Embodiments 1 and 2, but also to a light guide plate type cultivation method. According to the present invention, the plant body 50 is irradiated with mixed light of light emitted from the magenta LEDs 20a and light emitted from the red LEDs 20b. Accordingly, the present invention is considered to be more suitably applicable to the light guide plate type cultivation method.

In view of this, Embodiment 3 below deals with an example in which the plant cultivation system 10 includes a light guide plate.

### [Embodiment 3]

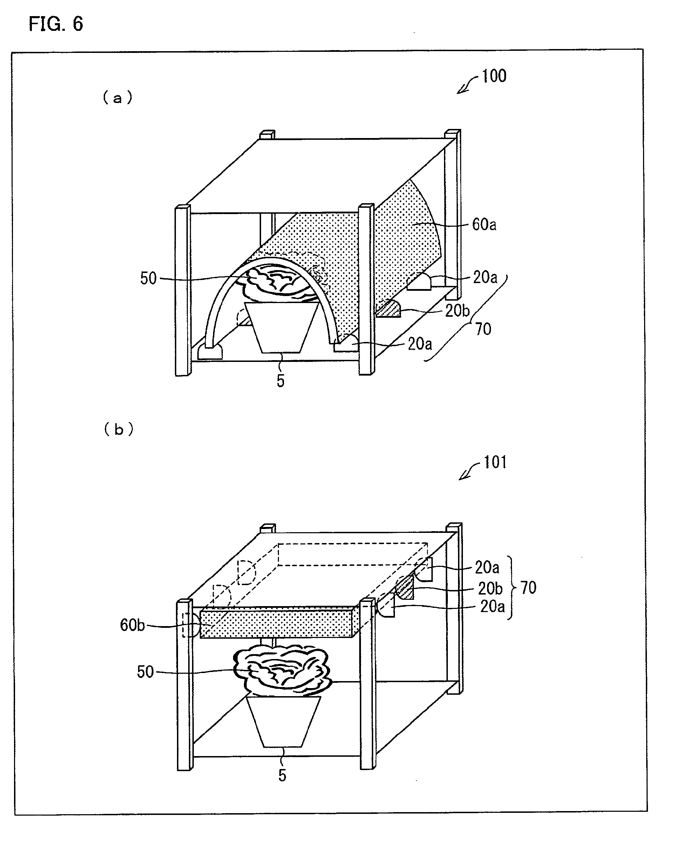

Another embodiment of the present invention is described below with reference to Figs. 6 through 9. Note that similar members to those of Embodiments 1 and 2 are given identical reference numerals, and are not explained repeatedly.

Plant cultivation systems 100 and 101 of the present embodiment are different from the plant cultivation systems 10 of Embodiments 1 and 2 in that each of the plant cultivation systems 100 and 101 includes a light guide plate (light guide member) 60 (60a or 60b). Further, a light source unit 70 including magenta LEDs 20a and red LEDs 20b is provided along two side surfaces of the light guide plate 60 so that light emitted from the light source unit 70 enters the light guide plate 60. That is, according to the present embodiment, a plant body 50 is cultivated not by irradiating the plant body 50 directly with light emitted from the light source unit 70, but by irradiating the plant body 50 with light surface-emitted by the light guide plate 60.

Note that the red LEDs 20b used as a light source in the present embodiment may have any of the peak wavelengths of Embodiments 1 and 2.
(a) of Fig. 6 is a view illustrating the plant cultivation system 100 which includes a curved light guide plate 60a as an example of the light guide plate 60. As illustrated in (a) of Fig. 6, in the plant cultivation system 100, the curved light guide plate 60a is provided above a cultivation container 5 and the plant body 50 so as to cover these members. Along end surfaces of the curved light guide plate 60a, the light source unit 70 including the magenta LEDs 20a and the red LEDs 20b is provided.

Meanwhile, (b) of Fig. 6 is a view illustrating the plant cultivation system 101 which includes a flat light guide plate 60b as another example of the light guide plate 60. As illustrated in (b) of Fig. 6, in the plant cultivation system 101, the flat light guide plate 60b are provided above the cultivation container 5 and the plant body 50. Along end surfaces (side surfaces) of the flat light guide plate 60b, the light source unit 70 including the magenta LEDs 20a and the red LEDs 20b is provided.

Note that the shape of the light guide plate 60 is not limited to the shape of the curved light guide plate 60a and the shape of the flat light guide plate 60b. The light guide plate 60 can have another shape, provided that it is an optical member which allows light to enter it and be surface-emitted.

The light guide plate 60 can be made of any material which can guide light, but is preferably made of a transparent material. For example, the light guide plate 60 can be made of a transparent resin such as a (meth)acrylic resin such as PMMA (methyl methacrylate resin), a COP (cycloolefin polymer) such as "ZEONOR" (Registered Trademark, produced by ZEON CORPORATION), a COC (cycloolefin copolymer), or polycarbonate.

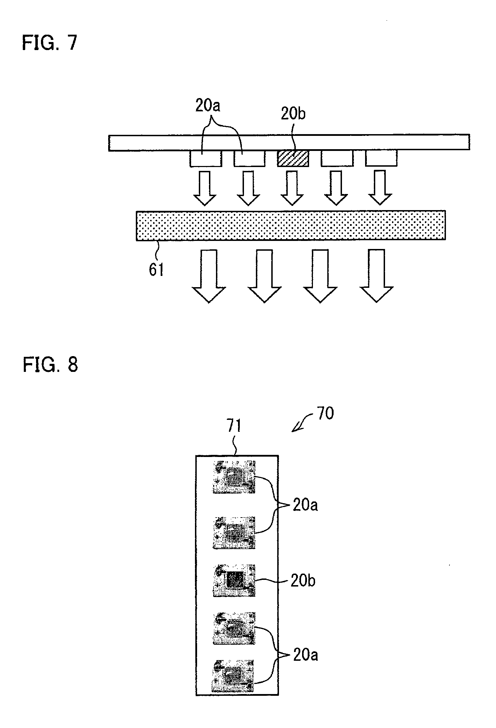

The above description has dealt with a case where the light guide plate 60 is provided so that a light source is located along end surfaces of the light guide plate 60. Meanwhile, such an arrangement is also possible in which a diffusion plate (diffusion member) 61 is provided below the magenta LEDs 20a and the red LEDs 20b as illustrated in Fig. 7. The diffusion plate 61 is an optical member which diffuses light emitted from the magenta LEDs 20a and the red LEDs 20b so that an object to be irradiated is uniformly irradiated with the light.

In a case where the diffusion plate 61 is provided below the light source (the magenta LEDs 20a and the red LEDs 20b), light emitted from the light source can be diffused. As a result, each plant body 50 can be uniformly irradiated with the light. Moreover, in a case where an optical member such as the diffusion plate 61 is provided below the light source, it is possible to protect the light source (LEDs).

The diffusion plate 61 is approximately a few millimeters in thickness. The diffusion plate 61 is, for example, made up of a transparent resin serving as a base material, and a light scattering agent dispersed in the transparent resin.

The transparent resin can be, for example, a polycarbonate resin, an acrylic resin, a fluorine acrylic resin, a silicone acrylic resin, an epoxy acrylate resin, a polystyrene resin, a cycloolefin polymer, a methylstyrene resin, a fluorene resin, polyethylene terephthalate (PET), polypropylene, an acrylnitrile-styrene copolymer, and an acrylonitrile-polystyrene copolymer.

As the light scattering agent, fine particles made of an oxide such as silica (SiO₂), alumina (Al₂O₃), magnesium oxide (MgO), or titania or fine particles such as calcium carbonate fine particles or barium sulfate fine particles can be used for example. Alternatively, as the light scattering agent, particles made of a resin such as an acrylic resin or a styrene resin may be used.

### (Configuration of Light Source Unit 70)

Fig. 8 is a view illustrating a configuration of a light source unit 70 of the present embodiment. The light source unit 70 includes a substrate 71, and magenta LEDs 20a and a red LED 20b which are disposed on the substrate 71 as illustrated in Fig. 8. Specifically, a column of LEDs is provided along a longitudinal direction so that a red LED 20b is positioned at a center of the column. The column includes 4 magenta LEDs 20a and 1 red LED 20b. The light source unit 70 is disposed so that the longitudinal direction of the substrate 71 coincides with a longitudinal direction of an end surface of the light guide plate 60.

Also in the present embodiment, the magenta LEDs 20a are used as a main light source for cultivation, and the red LED 20b is used as complimentary light to the magenta LEDs 20a, as in Embodiments 1 and 2. It is therefore desirable that the number of magenta LEDs 20a is larger than the number of red LEDs 20b as illustrated in Fig. 8.

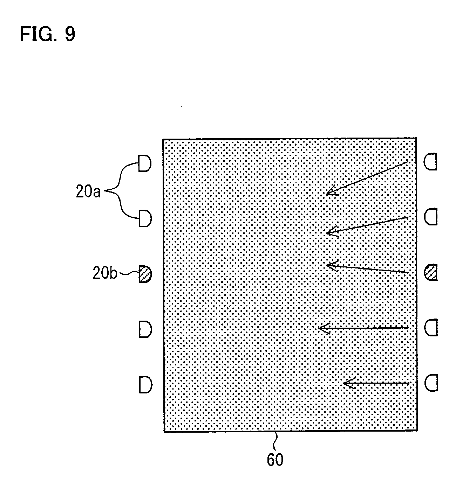

Fig. 9 is a view illustrating how the magenta LEDs 20a and the red LEDs 20b are disposed along edges of the light guide plate 60. As illustrated in Fig. 9, two types of light emitted from the magenta LEDs 20a and the red LEDs 20b enter the light guide plate 60 and are then mixed inside the light guide plate 60. Since an outer surface of the light guide plate 60 is processed (not illustrated) so as to prevent light from exiting from the outer surface, an inner surface of the light guide plate 60 (surface facing the plant body 50) serves as a light exit surface from which light exits. Accordingly, the light mixed inside the light guide plate 60 exits from the light exit surface, so that the plant body 50 provided as an object to be irradiated below the light guide plate 60 is irradiated with the light from a large number of directions.

### (Effect)

As described above, in the present embodiment, two types of light emitted from the magenta LEDs 20a and the red LEDs 20b are mixed inside the light guide plate 60, and then the plant body 50 is irradiated with the light thus mixed.

It is therefore possible to prevent a plant from being unevenly irradiated with light although a plant is generally unevenly irradiated with light in a case where a combination of a plurality of LEDs emitting different types of light with different wavelength ranges is used for plant cultivation.

### (Summary)

An illumination device (plant cultivation system 10) of an embodiment of the present invention is an illumination device which emits illumination light for plant cultivation,
the illumination device including:
a main light source (magenta LED 20a) including a semiconductor light-emitting element (LED element 91) and a fluorescent substance (fluorescent particle 90) which emits light upon irradiation of excitation light emitted from the semiconductor light-emitting element, the main light source emitting mixed-color light including far-red light having a wavelength of not less than 700 nm to not more than 800 nm; and
a red light source (red LED 20b) emitting red light having a wavelength of not less than 600 nm to not more than 700 nm.

According to the arrangement, the main light source emits mixed-color light including far-red light having a wavelength of not less than 700 nm to not more than 800 nm. The main light source includes a semiconductor light-emitting element and a fluorescent substance which emits light upon irradiation of excitation light emitted from the semiconductor light-emitting element. The main light source is capable of emitting far-red light with a higher light intensity than an LED which emits far-red light as monochromatic light. This allows the illumination device to irradiate a plant body with a practical amount of far-red light as an illumination device for plant cultivation.

Meanwhile, the red light source emits red light having a wavelength of not less than 600 nm to not more than 700 nm.

It is therefore possible to change proportion of red light to the whole illumination light by changing the number of red light sources and/or adjusting an amount of light emitted from the red light source. Further, it is possible to increase flexibility in designing a spectrum of the illumination light because the spectrum of the illumination light (especially the red light) can be changed to a desired one by selecting, depending on usage, a red light source emitting light having a proper peak wavelength.

Note that light including the mixed-color light emitted from the main light source and the red light emitted from the red light source is referred to as illumination light.

The illumination device of the embodiment of the present invention may be arranged such that the semiconductor light-emitting element emits, as the excitation light, blue light having a wavelength of not less than 400 nm to not more than 500 nm.

According to the arrangement, a plant body can be irradiated with the mixed-color light including the blue light, as part of the illumination light. By irradiating a plant with blue light (especially a wavelength in a range from 420 nm to 500 nm), it is possible to promote photomorphogenesis.

The illumination device of the embodiment of the present invention may further include a control section (control device 6) which controls electric power supplied to the red light source.

According to the arrangement, in which the control section controls electric power supplied to the red light source, it is possible to adjust a light amount of the red light source. It is therefore possible to easily regulate a ratio of the red light and the far-red light in the illumination light with which the plant is irradiated.

The illumination device of the embodiment of the present invention may be arranged such that a difference between (i) a peak wavelength of red light included in the mixed-color light emitted from the main light source and (ii) a peak wavelength of the red light emitted from the red light source is not more than 10 nm.

According to the arrangement, the peak wavelength of the red light included in the mixed-color light emitted from the main light source is almost equal to that of the red light emitted from the red light source.

Since the peak of the red light included in the mixed-color light emitted from the main light source overlaps the peak of the red light emitted from the red light source, a larger peak can be obtained as compared with a case where only one of these two peaks of the red light exists. It is likely that such red light with a remarkable peak is suitable for plant cultivation than red light with a gentle peak in a red region.

The illumination device of the embodiment of the present invention may be arranged such that a difference between (i) a peak wavelength of red light included in the mixed-color light emitted from the main light source and (ii) a peak wavelength of the red light emitted from the red light source is more than 10 nm.

According to the arrangement, in which a difference between (i) a peak wavelength of red light included in the mixed-color light emitted from the main light source and (ii) a peak wavelength of the red light emitted from the red light source is more than 10 nm, it is possible to obtain illumination light having two peaks in a red region.

The illumination device of the embodiment of the present invention may further include a light guide member (light guide plate 60) which guides and mixes the mixed-color light emitted from the main light source and the red light emitted from the red light source.

According to the arrangement, the mixed-color light emitted from the main light source and the red light emitted from the red light source are guided by the light guide member so as to be mixed.

It is therefore possible to prevent a plant to be irradiated from being unevenly irradiated with light although such unevenness of irradiation generally occurs in a case where a combination of a plurality of light sources having different wavelengths is used.

### (Additional Remark)

The present invention is not limited to the description of the embodiments above, but may be altered by a skilled person within the scope of the claims. An embodiment based on a proper combination of technical means disclosed in different embodiments is encompassed in the technical scope of the present invention. Furthermore, a new technical feature can be formed by combining technical means disclosed in the embodiments.

### Industrial Applicability

The present invention can be used as an illumination device for use in plant cultivation using artificial illumination light at a plant factory or the like.

### Reference Signs List

- 6:: Control device (control section)
- 10:: Plant cultivation system (illumination device)
- 20a:: Magenta LED (main light source)
- 20b:: Red LED (red light source)
- 60:: Light guide plate (light guide member)
- 60a:: Curved light guide plate (light guide member)
- 60b:: Flat light guide plate (light guide member)
- 90:: Fluorescent particles (fluorescent substances)
- 91:: LED element (semiconductor light-emitting element)
- 100:: Plant cultivation system (illumination device)
- 101:: Plant cultivation system (illumination device)

## Claims

1. An illumination device which emits illumination light for plant cultivation, comprising:
a main light source including a semiconductor light-emitting element and a fluorescent substance which emits light upon irradiation of excitation light emitted from the semiconductor light-emitting element, the main light source emitting mixed-color light including far-red light having a wavelength of not less than 700 nm to not more than 800 nm; and
a red light source emitting red light having a wavelength of not less than 600 nm to not more than 700 nm.

2. The illumination device according to claim 1, wherein the semiconductor light-emitting element emits, as the excitation light, blue light having a wavelength of not less than 400 nm to not more than 500 nm.

3. The illumination device according to claim 1 or 2, further comprising a control section which controls electric power supplied to the red light source.

4. The illumination device according to any one of claims 1 through 3, wherein a difference between (i) a peak wavelength of red light included in the mixed-color light emitted from the main light source and (ii) a peak wavelength of the red light emitted from the red light source is not more than 10 nm.

5. The illumination device according to any one of claims 1 through 4, further comprising a light guide member which guides and mixes the mixed-color light emitted from the main light source and the red light emitted from the red light source.
